# EUROPÄISCHE PATENTANMELDUNG

(11) **EP 4 793 070 A1**
(43) Veröffentlichungstag der Anmeldung: **19.08.2026**
(21) Anmeldenummer: 25158394.4
(22) Anmeldetag: 17.02.2025
(51) Int. Cl.: B60G 7/00

(54) **FEDERLENKER**

(71) Anmelder: Benteler Automobiltechnik GmbH, 33102 Paderborn (DE)
(72) Erfinder: MEYER, Stephan, 33605 Bielefeld (DE); VOIGT, Dirk, 33184 Altenbeken (DE); HOLMGREN, Tom, 2825 Gjøvik (NO); KUCKA, Branislav, 460 07 Liberec-Jeráb (CZ)
(74) Vertreter: Ksoll, Peter

(57) **Zusammenfassung**

Die Erfindung betrifft einen Federlenker (1) für eine Radaufhängung in einem Kraftfahrzeug. Der Federlenker (1) besitzt einen Lenkerkörper (2) aus Leichtmetall. Der Lenkerkörper (2) weist zwei Seitenwände (3, 4) und eine die Seitenwände verbindende Decke (5) auf. Erfindungsgemäß ist im Lenkerkörper (2) zumindest eine Knickkraft reduzierte Zone (Z1, Z2) ausgebildet. Die Zone (Z1, Z2) besitzt zumindest einen Bereich mit Werkstoffeigenschaften, die gegenüber den ursprünglichen Werkstoffeigenschaften reduziert sind. Insbesondere ist die Zone (Z1, Z2), zumindest partiell wärmebehandelt, wodurch die Knickkraft reduziert ist.

## Beschreibung

Die Erfindung betrifft einen Federlenker für eine Radaufhängung in einem Kraftfahrzeug, welcher einen Lenkerkörper aus Leichtmetall besitzt, der zwei Seitenwände und eine die Seitenwand verbindende Decke aufweist.

Federlenker haben die Funktion, die beim Bremsen oder Beschleunigen entstehenden Drehmomente abzustützen und die aus einem Stoß- bzw. Schwingungsdämpfer wirkenden Kräfte aufzunehmen. Zusätzlich stützen Federlenker im Zusammenwirken mit andere Fahrwerkskomponenten das Gewicht eines Kraftfahrzeugs ab. Daher werden sehr hohe Anforderungen an die Steifigkeit eines Federlenkers gestellt. Andererseits sollen die Federlenker ein möglichst geringes Bauteilgewicht aufweisen. Insbesondere auf Seiten der ungefederten Radmassen wirkt sich ein geringes Gewicht vorteilhaft auf die Fahrdynamik eines Kraftfahrzeugs aus.

Es ist bekannt, Federlenker bzw. deren Lenkerkörper aus Leichtmetall herzustellen.

Ein Federlenker mit einem Lenkerkörper aus einer Aluminiumlegierung geht aus der DE 10 2020 007 875 A1 hervor.

Auch durch die EP 4 378 718 A1 zählt ein Federlenker zum Stand der Technik, dessen Lenkerkörper aus einem Strangpressprofil aus einer Aluminiumlegierung gebildet sein kann.

Weiterhin ist bei dem aus der EP 1 232 029 B1 bekannten Federlenker der Lenkerkörper aus einem geschlossenen Hohlprofil aus hochfestem stranggepressten Aluminium gebildet.

Insbesondere unter versicherungstechnischen Aspekten ist man bestrebt im Falle der Kollision eines Kraftfahrzeugs mit einem Hindernis den Schaden am Fahrzeug möglichst gering zu halten. Aus sicherheitstechnischen Gründen und auch um Folgeschäden zu verhindern, soll ein aus einer Kollision resultierender Schaden aber auch gut zu erkennen sein.

In der Radaufhängung eines Kraftfahrzeugs sind dabei Schadensfälle von besonderer Bedeutung, die sich aus einer stossartigen Krafteinwirkung auf das Fahrzeugrad ergeben können. Hierbei wirken hohe Querkräfte am Fahrzeugrad, die über die Radaufhängung auf das Fahrgestell des Kraftfahrzeugs übertragen werden. Daraus resultiert eine erhöhte Beschädigungsgefahr auch von in der Kraftübertragungskette nachgeschalteten Fahrwerks- oder Fahrzeugkomponenten.

Der Erfindung liegt ausgehend vom Stand der Technik die Aufgabe zugrunde, einen im Belastungsverhalten verbesserten Federlenker zu schaffen, der hohe Steifigkeitsanforderungen und Lebensdaueranforderungen erfüllt.

Die Lösung dieser Aufgabe besteht in einem Federlenker gemäß Anspruch 1.

Vorteilhafte Ausgestaltungen und Weiterbildungen des erfindungsgemäßen Federlenkers sind Gegenstand der abhängigen Ansprüche.

Ausgestaltungen und Modifikationen von Merkmalen des erfindungsgemäßen Federlenkers, die einzeln oder in Kombination die Erfindung in technisch vorteilhafter Weise ausgestalten und/oder weiterbilden, ergeben sich auch aus der Beschreibung und den beigefügten Zeichnungen.

Begriffe wie oben, unten, oberseitig, unterseitig, horizontal, vertikal, längs, quer oder Längsrichtung und Querrichtung sowie Oberseite und Unterseite beziehen sich auf die bestimmungsgemäße Einbaulage und die Ausrichtung des Federlenkers in der Radaufhängung eines Kraftfahrzeugs

Ein erfindungsgemäßer Federlenker weist einen im Querschnitt U-förmigen Lenkerkörper auf. Der Lenkerkörper besteht aus Leichtmetall und ist aus vorzugsweise einem Strangpressprofil gefertigt. Der Lenkerkörper besitzt zwei Seitenwände, die durch eine Decke verbunden sind.

Die beiden Seitenwände sind in Federlenkerquerachse (y-Achse) mit Abstand parallel zueinander angeordnet. Die obere Decke erstreckt sich zwischen den Seitenwänden. Die der oberen Decke abgewandte Unterseite des Lenkerkörpers ist offen. Die Seitenwände kragen frei von der Decke weg.

Erfindungsgemäß weist der Lenkerkörper zumindest eine knickkraftreduzierte Zone auf. In der knickkraftreduzierten Zone ist die Knickkraft des Lenkerkörpers gezielt reduziert. Im Bereich der knickkraftreduzierten Zone besitzt der Federlenker eine gezielt eingestellte Strukturschwäche gegenüber dazu benachbarten Bereichen. Bei Überschreiten einer vorbestimmbaren Belastung, insbesondere unter einer axialen Druckbeanspruchung des Lenkerkörpers, wird die Stabilität des Lenkerkörpers in der knickkraftreduzierten Zone überschritten und es kommt zu einem seitlichen Ausweichen. In der knickkraftreduzierten Zone ist die Biegesteifigkeit des Querschnitts des Lenkerkörpers und/oder das Elastizitätsmodul (E-Modul) des Werkstoffs des Lenkerkörpers so eingestellt, dass das Bauteil gezielt versagt und ausgeknickt. Die knickkraftreduzierte Zone definiert im Lenkerkörper den Ort, in dem ein Ausbeulen bzw. Knicken des Lenkerkörpers beginnt. Weiterhin ist die knickkraftreduzierte Zone so ausgelegt, dass durch die Kraftumlenkung die Richtung vorgegeben wird, in welcher der Federlenker bzw. der Lenkerkörper ausknickt.

Die Erfindung schafft einen vom Bauteilgewicht her leichten Federlenker aus Leichtmetall, der kostengünstig zu produzieren ist. Der Federlenker weist eine hohe

Dauerhaltbarkeit auf und erfüllt ausreichend hohe Lebensdauererwartungen. Der Federlenker erfüllt hohe Steifigkeitsanforderungen und besitzt eine hohe Dauerschwingfestigkeit. Der Federlenker erfüllt die bestimmungsgemäß an ihn gestellten statischen und dynamischen Anforderungen und gewährleistet gleichzeitig ein kontrolliertes Einknickverhalten in einem Überlastfall.

Die knickkraftreduzierte Zone ist so ausgestaltet und angeordnet, dass der Lenkerkörper bzw. Bauteilkomponenten des Lenkerkörpers bei einer insbesondere parallel zu seiner Längsrichtung wirkenden Druckkrafteinleitung in einer vorbestimmten Richtung ausbeult oder ausknickt und sich plastisch verformt. Der Federlenker nimmt bei einer Kollision Kräfte auf und absorbiert diese bzw. wandelt diese in Verformungsarbeit um.

Die knickkraftreduzierte Zone ist des Weiteren so ausgestaltet, dass der Federlenker sich in einer vorbestimmten Richtung verformt. Eine solche vorgegebene Verformungsrichtung ist so ausgelegt, dass sie von anderen Komponenten der Radaufhängung wegführt, um diese möglichst nicht zu beschädigen.

Der Lenkerkörper des Federlenkers ist aus einem Strangpressprofil aus einem Leichtmetallwerkstoff gefertigt. Der Lenkerkörper des Federlenkers kann auch geschmiedet oder gegossen sein. Der Lenkerkörper des Federlenkers kann folglich ein Strangpressprofil, ein Schmiedeprofil oder ein Gussprofil sein. Insbesondere besteht der Lenkerkörper aus Aluminium bzw. einer Aluminiumlegierung, vorzugsweise der 6000er Serie, insbesondere der Aluminiumlegierung 6082 (EN AW-6082).

Die knickkraftreduzierte Zone weist zumindest einen Bereich auf, welcher Werkstoffeigenschaften besitzt, die gegenüber den ursprünglichen Werkstoffeigenschaften des Bereichs reduziert sind.

Vorzugsweise ist die Zone zumindest partiell wärmebehandelt. Durch die Wärmebehandlung ist die Knickkraft in der Zone reduziert und so eingestellt, dass die Solldeformationseigenschaften des Lenkerkörpers sichergestellt sind.

Die Wärmebehandlung des Lenkerkörpers erfolgt gezielt in den Bereichen, in welchen die Knickkraft reduziert werden soll.

Vorzugsweise erfolgt die Wärmebehandlung induktiv mittels eines Induktors.

Die Temperatur der Wärmebehandlung liegt zwischen 250° C bis 500° C. Die Dauer der Wärmebehandlung ist kurz. Insbesondere erfolgt die Wärmebehandlung in einer Zeit kleiner als 15 s.

Erfindungsgemäß ist die Streckgrenze Rp-0,2 in der knickraftreduzierten Zone gezielt herabgesetzt. Insbesondere ist die Streckgrenze Rp-0,2 in der Zone gegenüber der Streckgrenze Rp-0,2 des Ausgangswerkstoffes um einen Faktor zwischen 0,3 bis 0,6 herabgesetzt.

Eine knickkraftreduzierte Zone kann in einer Seitenwand und/oder der Decke vorgesehen sein. Die Anordnung der einen knickkraftreduzierten Zone und/oder insbesondere von mehreren knickkraftreduzierten Zonen im Lenkerkörper relativ zueinander ist so ausgelegt, dass ein Knicken in bzw. um die y-Achse und ein Knicken um die z-Achse entkoppelt ist. Eine knickkraftreduzierte Zone in einer Seitenwand und eine knickkraftreduzierte Zone in der Decke können in Längsachse des Federlenkers versetzt zueinander angeordnet sein.

Insbesondere ist eine knickkraftreduzierte Zone zwischen dem Federsitz bzw. einer Federsitzauflage des Federlenkers und einem achsträgerseitigen Lagerabschnitt des Federlenkers angeordnet.

Eine besonders vorteilhafte Ausführungsform sieht vor, dass die knickkraftreduzierte Zone eine in Federlenkerlängsachse (x-Achse) gemessene Breite aufweist, welche zwischen 5 mm und 50 mm bemessen ist.

Die knickkraftreduzierte Zone kann einen Hauptbereich und zumindest einen Übergangsbereich aufweisen. Die Streckgrenze Rp-0,2 ist im Hauptbereich geringer als in einem Übergangsbereich.

Vorzugsweise schließen sich beidseitig an einen Hauptbereich jeweils ein Übergangsbereich an.

Der Hauptbereich kann beispielsweise eine Breite von 20 mm besitzen. Ein Übergangsbereich ist ca. 5 mm breit. Bei einem Hauptbereich mit einer Breite von 20 mm der jeweils beidseitig durch einen Übergangsbereich mit einer Breite von etwa 5 mm begrenzt, ergibt sich so eine Breite der knickkraftreduzierten Zone von 30 mm.

Besonders vorteilhaft erstreckt sich eine knickkraftreduzierte Zone streifenförmig über die gesamte Höhe einer Seitenwand des Lenkerkörpers.

Weiterhin kann eine knickkraftreduzierte Zone sich quer über die Decke zwischen den beiden Seitenwänden erstrecken. Auch die knickkraftreduzierte Zone in der Decke ist streifenmäßig über die Decke erstreckt.

Der Hauptbereich einer knickkraftreduzierten Zone weist eine Breite auf. Ebenso weist ein Übergangsbereich eine Breite auf. Die Breite des Hauptbereichs ist größer als die Breite eines Übergangsbereichs.

Bei einer weiteren besonders vorteilhaften Ausführungsform eines Federlenkers ist vorgesehen, dass der Lenkerkörper eine Kerbe und/oder eine Sicke und/oder eine Aussparung aufweist. Die Kerbe und/oder die Sicke und/oder die Aussparung sind vorzugsweise im Bereich der knickkraftreduzierten Zone angeordnet. Durch die Kerbe, die Sicke oder eine Aussparung wird eine mechanische Schwächung der Bauteilfestigkeit realisiert. Hierdurch kann das Knickverhalten eingestellt und bestimmt werden.

Die mechanische Schwächung des Lenkerkörpers durch eine Kerbe, eine Sicke oder eine Aussparung bilden eine Solldeformationsstelle. Diese initiiert oder unterstützt das Knickverhalten des Lenkerkörpers. Zudem kann durch diese mechanische Solldeformationsstelle eine Knick- bzw. Ausbeulrichtung vorgegeben werden.

Weiterhin vorteilhaft ist die Kerbe und/oder die Sicke und/oder Aussparung im Übergang oder benachbart zum Übergang einer Seitenwand zur Decke angeordnet.

Bei einer für die Praxis vorteilhaften Ausgestaltung weist jede Seitenwand einen sich in Längsrichtung des Lenkerkörpers erstreckenden nach außen gerichteten oberen Steg auf.

Der Steg kann einen nach oben gerichteten Bogenabschnitt aufweisen. Insbesondere ist ein Bogenabschnitt im Bereich des Federsitzes vorgesehen. Zweckmäßigerweise ist in jedem Steg einer Seitenwand ein nach oben gerichteter Bogenabschnitt angeordnet. Ein Bogenabschnitt ist im Übergang der Federsitzauflage zum achsträgerseitigen Längenabschnitt des Lenkerkörpers angeordnet.

Weiterhin kann jede Seitenwand einen unteren freien Endabschnitt besitzen, wobei der Endabschnitt nach innen gekrümmt ist. Nach innen gekrümmt bedeutet, dass die Endabschnitte in Richtung zur Federlenkerlängsachse (x-Achse) weisen. Der nach innen gerichtete Endabschnitt ist bauraumbedingt vorteilhaft. Grundsätzlich kann der Endabschnitt auch gerade auslaufen oder nach außen gerichtet sein. Möglich ist auch, dass die Seitenwand im Bereich des Endabschnitts eine Aufdickung aufweist, um die Steifigkeit zu erhöhen.

Die Erfindung ist nachfolgend anhand eines in den Zeichnungen dargestellten Ausführungsbeispiels näher beschrieben. Es zeigen:
- Figur 1: einen erfindungsgemäßen Federlenker in einer perspektivischen Darstellung;
- Figur 2: den Federlenker gemäß der Darstellung von Figur 1 in einer Seitenansicht;
- Figur 3: den Federlenker in einer Stirnansicht und
- Figur 4: den Federlenker in einer Draufsicht.

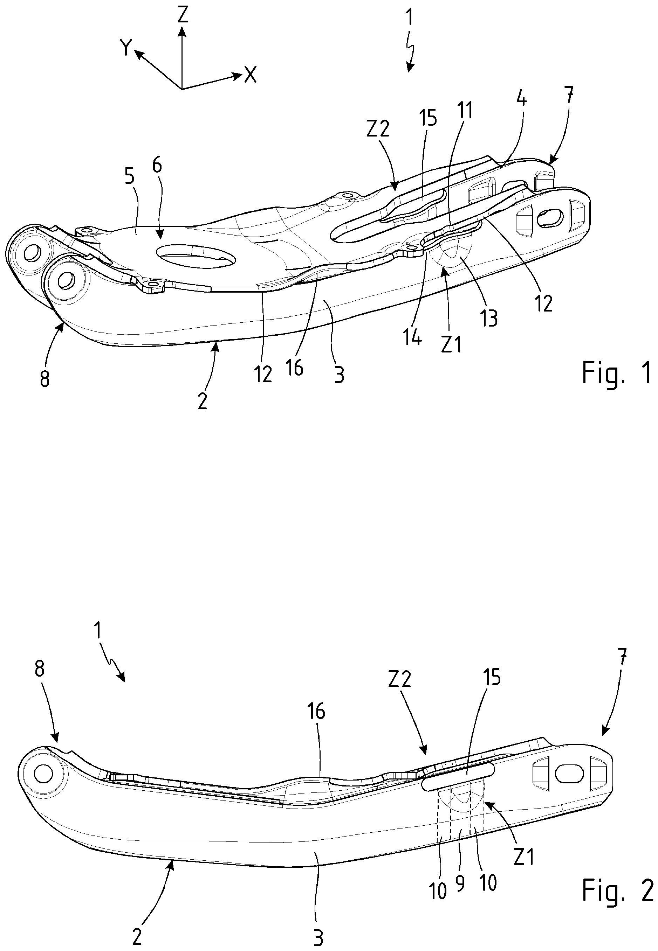

Anhand der Figuren 1 bis 4 ist ein erfindungsgemäßer Federlenker 1 beschrieben.

In der Figur 1 ist ein Koordinatensystem dargestellt, um in der Konstruktion des Federlenkers 1 die Lage von Bauteilkomponenten zu definieren. Die x-Achse entspricht der Federlenkerlängsachse, die y-Achse der Federlenkerquerachse und die z-Achse entspricht der Federlenkerhochachse.

Der Federlenker 1 besitzt einen Lenkerkörper 2. Der Lenkerkörper 2 besteht aus Leichtmetall und weist zwei Seitenwände 3, 4 sowie eine die Seitenwände 3, 4 verbindende Decke 5 auf.

Der Lenkerkörper 2 ist ein Strangpressprofil, ein Schmiedeprofil oder ein Gussprofil aus Aluminium bzw. einer Aluminiumlegierung. Insbesondere besteht der Lenkerkörper 2 aus einer Aluminiumlegierung der 6000er Serie. Für die Praxis wird insbesondere die Aluminiumlegierung 6082 als vorteilhaft angesehen, bei der es sich um eine Aluminium-Magnesium-Silizium-Knetlegierung handelt.

Eine Seitenwand 3, 4 besitzt eine in der Praxis vorteilhafte Dicke zwischen 4,0 mm bis 6,5 mm besitzen. Die Decke 5 des Lenkerkörpers 2 ist zwischen 4,0 mm und 10,0 mm dick.

Die Seitenwände 3, 4 können sowohl in Längsrichtung (x-Achse) des Lenkerkörpers 2 als auch in Federlenkerhochachse (z-Achse) einen variierenden Dickenverlauf besitzen. Insbesondere im Bereich des Federsitzes können die Seitenwände 3, 4 eine größere Dicke besitzen als in einem mittleren Längenabschnitt oder im Bereich oberer Stegabschnitte einer Seitenwand 3, 4.

Die Seitenwände 3, 4 des Lenkerkörpers 2 sind spiegelsymmetrisch zueinander ausgebildet und mit Abstand parallel zueinander angeordnet. In der Decke 5 ist eine Federsitzauflage 6 ausgebildet. Der Lenkerkörper 2 weist einen achsträgerseitigen Lagerabschnitt 7 und einen fahrzeugaufbauseitigen Lagerabschnitt 8 auf.

Im Lenkerkörper 2 sind knickkraftreduzierte Zonen Z1, Z2 ausgebildet. Eine erste knickkraftreduzierte Zone Z1 erstreckt sich jeweils über die Höhe einer Seitenwand 3, 4.

Eine zweite knickkraftreduzierte Zone Z2 verläuft über die Breite der Decke 5.

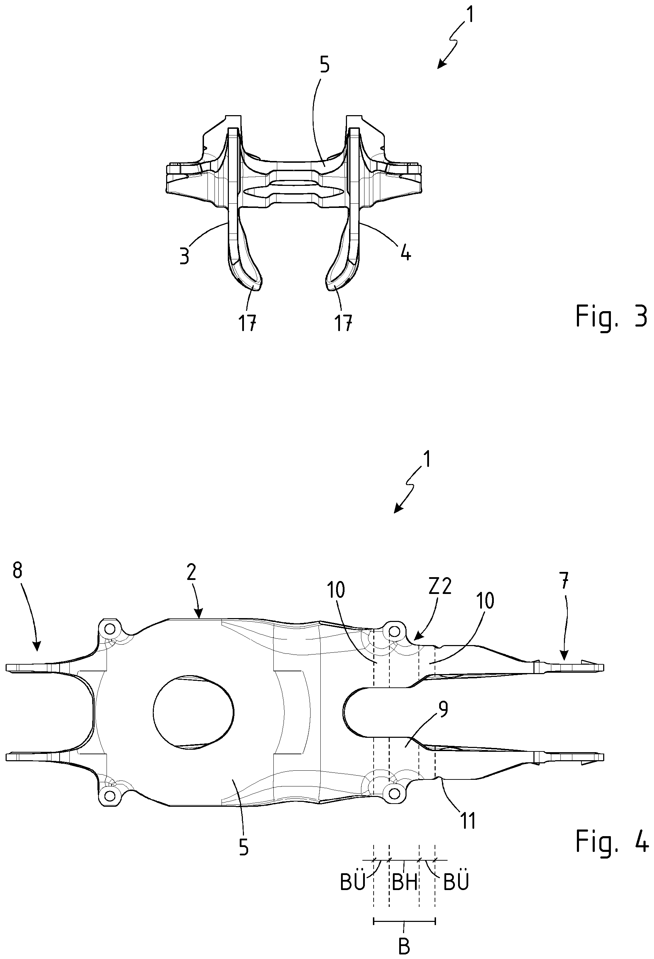

Die Zonen Z1 und Z2 sind in den Figuren 2 und 4 technisch schematisiert strichpunktiert dargestellt.

Sowohl die Zone Z1 als auch die Zone Z2 sind zwischen der Federsitzauflage 6 und dem achsträgerseitigen Lagerabschnitt 7 angeordnet.

In einer knickkraftreduzierten Zone Z1, Z2 ist die Knickkraft des Lenkerkörpers 2 bzw. der Seitenwände 3, 4 und der Decke 5 gezielt reduziert. Die Knickkraftreduktion in der Zone Z1, Z2 wird durch eine lokale bzw. partielle Wärmebehandlung des Lenkerkörpers 2 in der Zone Z1, Z2 bewirkt. Bei der Wärmebehandlung wird der Lenkerkörper 2 in den Zonen Z1, Z2 vorzugsweise induktiv mittels eines Induktors auf eine Temperatur zwischen 250° C und 500° C erwärmt. Die Dauer der Wärmebehandlung ist kürzer als 15 s.

Durch die Wärmebehandlung wird die Streckgrenze Rp-0,2 in der Zone Z1, Z2 gegenüber der Streckgrenze Rp0,2 des Ausgangswerkstoffes um einen Faktor zwischen 0,3 bis 0,6 herabgesetzt.

Durch die lokale Wärmebehandlung des Lenkerkörpers 2 im Bereich einer knickkraftreduzierten Zone Z1, Z2 besitzt der Federlenker 1 eine gezielte Strukturschwäche gegenüber den dazu benachbarten Bauteilabschnitten des Lenkerkörpers 2. In einem Überlastfall, insbesondere bei Überschreiten einer vorbestimmbaren Druckbelastung in Längsrichtung des Federlenkers 1, knickt der Lenkerkörper 2 im Bereich einer knickkraftreduzierten Zone Z1, Z2 ein. Das Einknicken beginnt in der Zone Z1, Z2. Die Ausgestaltung und Konfiguration einer knickkraftreduzierten Zone Z1, Z2 ist so ausgelegt, dass neben der gezielten Deformation auch eine Steuerung der Verformungsrichtung erfolgt, in welcher der Lenkerkörper 2 sich verformen soll. Auf diese Weise kann eine Beschädigung von nachgeschalteten Fahrwerks- oder Fahrzeugkomponenten reduziert werden.

In einer Zone Z1, Z2 sind die Werkstoffeigenschaften des Lenkerkörpers 2 durch eine partielle Wärmebehandlung für das Knickverhalten des Lenkerkörpers 2 optimiert. Die Festigkeit wird in einer knickkraftreduzierten Zone Z1, Z2 reduziert und die Duktilität erhöht. Im Bereich der knickkraftreduzierten Zone Z1, Z2 kann sich der Werkstoff des Lenkerkörpers 2 stark plastisch verformen. Hierdurch wird die gesamte Crashperformance und das Energieabsorptionsvermögen des Federlenkers 1 verbessert.

Die Zone Z1, Z2 weist einen Hauptbereich 9 sowie jeweils benachbart zum Hauptbereich 9 einen Übergangsbereich 10 auf. Die Streckgrenze Rp0,2 ist im Hauptbereich 9 geringer als im Übergangsbereich 10. In den Bereichen besitzt eine Zone Z1, Z2 Werkstoffeigenschaften, die gegenüber den ursprünglichen Werkstoffeigenschaften des Bereichs 9, 10 reduziert sind.

Der Hauptbereich 9 besitzt eine Breite BH. Ein Übergangsbereich 10 besitzt eine Breite BÜ. Die Breite BH des Hauptbereichs 9 ist größer als die Breite BÜ eines Übergangsbereichs 10. In einem praktischen Ausführungsbeispiel weist der Hauptbereich 9 eine Breite von ca. 20 mm auf. Ein Übergangsbereich 10 ist jeweils etwa 5 mm breit.

Der Lenkerkörper 2 besitzt außerhalb der knickkraftreduzierten Zonen Z1, Z2 eine Streckgrenze Rp0,2 von größer 280 MPa bei einer Zugfestigkeit Rm von größer 300 MPa. Hierbei handelt es sich um die ursprünglichen Werkstoffeigenschaften. In einer knickkraftreduzierten Zone Z1, Z2 beträgt die Streckgrenze Rp0,2 im Hauptbereich 9 140 MPa bis 180 MPa, insbesondere 150 MPa._In einem Übergangsbereich 10 ist die Streckgrenze Rp0,2 größer als in einem Hauptbereich 9. Die Streckgrenze Rp0,2 kann in einem Übergangsbereich 10 beispielsweise 200 MPa betragen.

In der Praxis kann eine knickkraftreduzierte Zone Z1, Z2 eine in Längsachse (x-Achse) des Lenkerkörpers 2 gemessene Breite B von 10 mm bis 50 mm besitzen. Hierbei handelt es sich um Gesamtbreite, die sich aus der Breite des Hauptbereichs 9 und der Breite der Übergangsbereiche 10 zusammensetzt.

Weiterhin besitzt der Lenkerkörper 2 im Bereich der Zone Z1, Z2 eine Kerbe 11. Eine Kerbe 11 ist in jeder Seitenwand 3, 4 in einem nach außen gerichteten oberen Steg 12 vorgesehen.

Des Weiteren ist eine Sicke 13 jeweils in einer Seitenwand 3, 4 angeordnet. Die Sicke 13 ist im Übergang 14 vom oberen Steg 12 zu einer Seitenwand 3, 4 ausgebildet. Die Sicke 13 erstreckt sich dreieckförmig vom Steg 12 aus abwärtsgerichtet, bis etwa zur Mitte einer Seitenwand 3, 4. Die Sicke 13 ist innerhalb der Zone Z1 einer Seitenwand 3, 4 angeordnet.

Auch wenn im dargestellten Ausführungsbeispiel eine dreieckförmig konfigurierte Sicke 13 dargestellt ist, kann eine Sicke auch geometrisch anders konfiguriert sein.

Benachbart zum Übergang 14 jeweils einer Seitenwand 3, 4 zur Decke 5 ist des Weiteren eine Aussparung 15 in Form eines Schlitzes angeordnet. Die Aussparung 15 erstreckt sich über die Breite einer knickkraftreduzierten Zone Z1 am oberen Ende einer Seitenwand 3, 4 unterhalb eines nach außen gerichteten Stegs 12. Die schlitzförmige Aussparung 15 ist länger als hoch. Die Aussparung 15 kann eine Höhe zwischen 4 mm und 10 mm besitzen.

Die Sicke 13 ist in einer Seitenwand 3, 4 unterhalb der Aussparung 15 angeordnet.

Im dargestellten Ausführungsbeispiel ist die Aussparung 15 in der knickkraftreduzierten Zone Z1 einer Seitenwand 3, 4 dargestellt. Grundsätzlich kann eine Aussparung 15 auch neben bzw. versetzt zu einer knickkraftreduzierten Zone Z1 vorgesehen sein.

Die Kerbe 11, die Sicke 13 und die Aussparung 15 bilden eine mechanische Solldeformationsstelle im Lenkerkörper 2, welche das Knickverhalten bzw. Einknicken initiieren, unterstützen und lenken kann. Hierdurch wird die durch die lokale Wärmebehandlung induzierte Knickkraftreduzierung vorteilhaft unterstützt.

In den oberen Stegen 12 einer Seitenwand 3, 4 ist lokal begrenzt ein nach oben gerichteter Bogenabschnitt 16 vorgesehen. Der Bogenabschnitt 16 ist im Bereich des Federsitzes bzw. vor der Federsitzauflage 6 in Richtung zum achsträgerseitigen Lagerabschnitt 7 angeordnet. Die nach oben gekrümmten Bogenabschnitte 16 erhöhen die Steifigkeit des Lenkerkörpers 2 und verbessern die Dauerschwingfestigkeit.

Des Weiteren weist jede Seitenwand 3, 4 einen unteren freien Endabschnitt 17 auf, wobei die Endabschnitte 17 nach innen gekrümmt ausgebildet sind (s. Figur 3). Auch diese Maßnahme trägt zur Erhöhung der Steifigkeit des Lenkerkörpers 2 und der Verbesserung der Dauerschwingfestigkeit bei.

### Bezugszeichen:

- 1 -: Federlenker
- 2 -: Lenkerkörper
- 3 -: Seitenwand
- 4 -: Seitenwand
- 5 -: Decke
- 6 -: Federsitzauflage
- 7 -: radträgerseitiger Lagerabschnitt
- 8 -: fahrzeugaufbauseitiger Lagerabschnitt
- 9 -: Hauptbereich
- 10 -: Übergangsbereich
- 11 -: Kerbe
- 12 -: Steg
- 13 -: Sicke
- 14 -: Übergang
- 15 -: Aussparung
- 16 -: Bogenabschnitt
- 17 -: Endabschnitt

- x -: Federlenkerlängsachse
- y -: Federlenkerquerachse
- z -: Federlenkerhochachse
- B -: Gesamtbreite
- BH -: Breite v. 9
- BÜ -: Breite v. 10

## Patentansprüche

1. Federlenker (1) für eine Radaufhängung in einem Kraftfahrzeug, welcher einen Lenkerkörper (2) aus Leichtmetall besitzt, der zwei Seitenwände (3, 4) und eine die Seitenwände (3, 4) verbindende Decke (5) aufweist, **dadurch gekennzeichnet, dass** der Lenkerkörper (2) zumindest eine knickkraftreduzierte Zone (Z1, Z2) ausweist.

2. Federlenker (1) nach Anspruch 1, **dadurch gekennzeichnet, dass** die Zone (Z1, Z2) zumindest einen Bereich (9, 10) aufweist, welcher Werkstoffeigenschaften besitzt, die gegenüber den ursprünglichen Werkstoffeigenschaften des Bereichs (9, 10) reduziert sind.

3. Federlenker (1) nach Anspruch 1 oder 2, **dadurch gekennzeichnet, dass** die Zone (Z1, Z2) zumindest partiell wärmebehandelt ist und die Knickkraft durch die Wärmehandlung reduziert ist.

4. Federlenker (1) nach einem der Ansprüche 1 bis 3, **dadurch gekennzeichnet, dass** die Streckgrenze Rp0,2 in der Zone (Z1, Z2) gegenüber der Streckgrenze Rp0,2 des Ausgangswerkstoffs um einen Faktor zwischen 0,3 bis 0,6 herabgesetzt ist.

5. Federlenker (1) nach einem der Ansprüche 1 bis 4, **dadurch gekennzeichnet, dass** eine Zone (Z1, Z2) in einer Seitenwand (3, 4) und/oder der Decke (5) vorgesehen ist.

6. Federlenker (1) nach einem der Ansprüche 1 bis 5, **dadurch gekennzeichnet, dass** die Zone (Z1, Z2) eine in Längsachse (x-Achse) des Lenkerkörpers (2) gemessene Breite (B) aufweist, welche zwischen 5 mm und 50 mm bemessen ist.

7. Federlenker (1) nach einem der Ansprüche 1 bis 6, **dadurch gekennzeichnet, dass** die Zone (Z1, Z2) einen Hauptbereich (9) und zumindest einen Übergangsbereich (10) aufweist, wobei die Streckgrenze Rp0,2 im Hauptbereich (9) geringer ist als in einem Übergangsbereich (10).

8. Federlenker (1) nach Anspruch 7, **dadurch gekennzeichnet, dass** der Hauptbereich (9) eine Breite (BH) besitzt und ein Übergangsbereich (10) eine Breite (BÜ) besitzt, wobei die Breite (BH) des Hauptbereichs (9) größer ist als die Breite (BÜ) eines Übergangsbereichs (10).

9. Federlenker (1) nach einem der Ansprüche 1 bis 8, **dadurch gekennzeichnet, dass** der Lenkerkörper (2), vorzugsweise im Bereich der Zone (Z1, Z2), eine Kerbe (11) und/oder eine Sicke (13) und/oder eine Aussparung (15) aufweist.

10. Federlenker (1) nach Anspruch 9, **dadurch gekennzeichnet, dass** die Kerbe (11) und/oder die Sicke (13) und/oder die Aussparung (15) im Übergang (14) oder benachbart zum Übergang einer Seitenwand (3, 4) zur Decke (5) angeordnet ist.

11. Federlenker (1) nach einem der Ansprüche 1 bis 10, **dadurch gekennzeichnet, dass** jede Seitenwand (3, 4) einen sich in Längsrichtung des Lenkerkörpers (2) erstreckenden nach außen gerichteten oberen Steg (12) aufweist.

12. Federlenker (1) nach Anspruch 11, **dadurch gekennzeichnet, dass** der Steg (12) einen nach oben gerichteten Bogenabschnitt (16) aufweist.

13. Federlenker (1) nach einem der Ansprüche 1 bis 12, **dadurch gekennzeichnet, dass** jede Seitenwand (3, 4) einen unteren freien Endabschnitt (17) besitzt, wobei der Endabschnitt (17) nach innen gekrümmt ist oder der Endabschnitt nach außen gekrümmt ist oder der Endabschnitt insbesondere am freien Ende eine Verdickung aufweist.

14. Federlenker (1) nach einem der Ansprüche 1 bis 13, **dadurch gekennzeichnet, dass** der Lenkerkörper (2) ein Strangpressprofil, ein Schmiedeprofil oder ein Gussprofil aus Aluminium oder einer Aluminiumlegierung ist.

## Geänderte Patentansprüche

### Geänderte Patentansprüche gemäss Regel 137(2) EPÜ.

1. Federlenker (1) für eine Radaufhängung in einem Kraftfahrzeug, welcher einen Lenkerkörper (2) aus Leichtmetall besitzt, der zwei Seitenwände (3, 4) und eine die Seitenwände (3, 4) verbindende Decke (5) aufweist, wobei der Lenkerkörper (2) zumindest eine knickkraftreduzierte Zone (Z1, Z2) ausweist, **dadurch gekennzeichnet, dass** die Zone (Z1, Z2) zumindest einen Bereich (9, 10) aufweist, welcher Werkstoffeigenschaften besitzt, die gegenüber den ursprünglichen Werkstoffeigenschaften des Bereichs (9, 10) reduziert sind, wobei die Zone (Z1, Z2) zumindest partiell wärmebehandelt ist und die Knickkraft in der Zone (Z1, Z2) durch die Wärmehandlung reduziert ist.

2. Federlenker (1) nach Anspruch 1 , **dadurch gekennzeichnet, dass** die Streckgrenze Rp0,2 in der Zone ( Z1, Z2) gegenüber der Streckgrenze Rp0,2 des Ausgangswerkstoffs um einen Faktor zwischen 0,3 bis 0,6 herabgesetzt ist.

3. Federlenker (1) nach Anspruche 1 oder 2, **dadurch gekennzeichnet, dass** eine Zone (Z1, Z2) in einer Seitenwand (3, 4) und/oder der Decke (5) vorgesehen ist.

4. Federlenker (1) nach einem der Ansprüche 1 bis 3, **dadurch gekennzeichnet, dass** die Zone (Z1, Z2) eine in Längsachse (x-Achse) des Lenkerkörpers (2) gemessene Breite (B) aufweist, welche zwischen 5 mm und 50 mm bemessen ist.

5. Federlenker (1) nach einem der Ansprüche 1 bis 4, **dadurch gekennzeichnet, dass** die Zone (Z1, Z2) einen Hauptbereich (9) und zumindest einen Übergangsbereich (10) aufweist, wobei die Streckgrenze Rp0,2 im Hauptbereich (9) geringer ist als in einem Übergangsbereich (10).

6. Federlenker (1) nach Anspruch 5, **dadurch gekennzeichnet, dass** der Hauptbereich (9) eine Breite (BH) besitzt und ein Übergangsbereich (10) eine Breite (BÜ) besitzt, wobei die Breite (BH) des Hauptbereichs (9) größer ist als die Breite (BÜ) eines Übergangsbereichs (10).

7. Federlenker (1) nach einem der Ansprüche 1 bis 6, **dadurch gekennzeichnet, dass** der Lenkerkörper (2), vorzugsweise im Bereich der Zone (Z1, Z2), eine Kerbe (11) und/oder eine Sicke (13) und/oder eine Aussparung (15) aufweist.

8. Federlenker (1) nach Anspruch 7, **dadurch gekennzeichnet, dass** die Kerbe (11) und/oder die Sicke (13) und/oder die Aussparung (15) im Übergang (14) oder benachbart zum Übergang einer Seitenwand (3, 4) zur Decke (5) angeordnet ist.

9. Federlenker (1) nach einem der Ansprüche 1 bis 8, **dadurch gekennzeichnet, dass** jede Seitenwand (3, 4) einen sich in Längsrichtung des Lenkerkörpers (2) erstreckenden nach außen gerichteten oberen Steg (12) aufweist.

10. Federlenker (1) nach Anspruch 9, **dadurch gekennzeichnet, dass** der Steg (12) einen nach oben gerichteten Bogenabschnitt (16) aufweist.

11. Federlenker (1) nach einem der Ansprüche 1 bis 10, **dadurch gekennzeichnet, dass** jede Seitenwand (3, 4) einen unteren freien Endabschnitt (17) besitzt, wobei der Endabschnitt (17) nach innen gekrümmt ist oder der Endabschnitt nach außen gekrümmt ist oder der Endabschnitt insbesondere am freien Ende eine Verdickung aufweist.

12. Federlenker (1) nach einem der Ansprüche 1 bis 11, **dadurch gekennzeichnet, dass** der Lenkerkörper (2) ein Strangpressprofil, ein Schmiedeprofil oder ein Gussprofil aus Aluminium oder einer Aluminiumlegierung ist.
